# EUROPÄISCHE PATENTANMELDUNG

(11) **EP 4 016 692 A1**
(43) Veröffentlichungstag der Anmeldung: **22.06.2022**
(21) Anmeldenummer: 21214799.5
(22) Anmeldetag: 15.12.2021
(51) Int. Cl.: H01M 10/12, H01M 50/114, H01M 50/148, H01M 50/15

(54) **BATTERIEDECKEL**

(30) Priorität: 17.12.2020 AT 511012020
(71) Anmelder: Banner GmbH, 4021 Linz (AT)
(72) Erfinder: KAUFMANN, Markus, 4540 Pfarrkirchen (AT); BAWART, Thomas, 4021 Linz (AT); DIERMAIER, Helmut, 4021 Linz (AT)
(74) Vertreter: Burger, Hannes

(57) **Zusammenfassung**

Die Erfindung betrifft einen Batteriedeckel (4) für eine, einen Flüssigelektrolyt (13) aufweisende Sekundärbatterie (1), umfassend einen Deckelköper der eine Deckelstirnwand (8) einen an die Deckelstirnwand (8) anschließenden Deckelmantel (9) aufweist, wobei eine innere Oberfläche (16) des Deckelkörpers zumindest bereichsweise eine konkave Krümmung oder eine Abschrägung aufweist, oder bei dem im von dem Deckelmantel (9) und der Deckelstirnwand (8) umschlossenen Deckelvolumen ein mit einer konkav gekrümmten Oberfläche oder mit einer Abschrägung versehenes Ableitelement (15) angeordnet ist.

## Beschreibung

Die Erfindung betrifft einen Batteriedeckel für eine, einen Flüssigelektrolyt aufweisende Sekundärbatterie, umfassend einen Deckelköper der eine Deckelstimwand und einen an die Deckelstimwand anschließenden Deckelmantel aufweist.

Zudem betrifft die Erfindung eine Sekundärbatterie umfassend ein Batteriegehäuse mit einem Batteriekasten, der einen Kastenboden und einen daran anschließenden Kastenmantel aufweist, und einen mit dem Batteriekasten verbundenen Batteriedeckel, wobei im Batteriegehäuse ein Flüssigelektrolyt und in den Flüssigelektrolyt eintauchende Elektroden eines Elektrodenpakets angeordnet sind.

Die Erfindung betrifft auch ein Verfahren zur Reduzierung der Dichteschichtung eines Flüssigelektrolyts einer Sekundärbatterie.

Weiter betrifft die Erfindung die Verwendung der Sekundärbatterie.

Wie in der DE 10 2010 021 868 A1 ausgeführt ist ein besonderes Problem bei Blei-Säure-Batterien die möglichst vollständige Nutzung der Elektrodenfläche. Ist in einem Bereich der Elektrodenoberfläche die Säurekonzentration zu hoch, führt das zu Korrosion und letztlich zur Zersetzung der Elektrodenplatten. Ist die Säurekonzentration zu niedrig, fehlen die für ein zuverlässiges Arbeiten der Batterie erforderlichen elektrolytischen Eigenschaften. Aufgrund bekannter Effekte ist innerhalb einer Batterie die Säuredichte ungleichmäßig. Um diesen Mangel zu beheben, sind, wie in dieser Druckschrift ausgeführt, Vorrichtungen zur Elektrolytdurchmischung entwickelt worden. Damit wird auch gleichzeitig verhindert, dass sich Ablagerungen bilden, welche die Funktion und die Lebensdauer der Batterie ebenfalls beeinträchtigen. Die DE 10 2010 021 868 A1 selbst beschreibt eine Flüssigelektrolytbatterie mit einer Durchmischungsvorrichtung, wobei die Flüssigelektrolytbatterie einen Batteriekasten, ein Elektrodenpaket, einen Elektrolyt mit einem Elektrolytpegel und eine Durchmischungsvorrichtung aufweist und die Durchmischungsvorrichtung folgende Merkmale aufweist: eine im Einbauzustand im Batteriekasten senkrecht angeordnete Kanalplatte und eine im Einbauzustand im Batteriekasten waagrecht angeordnete Ablaufplatte.

Bei Blei-Säure-Batterien für einen Pkw ist das Fahrverhalten (Bremsen, Beschleunigen, Kurvenfahren, etc.) in der Regel ausreichend, um für eine ausreichende Durchmischung der Säure durch die auftretenden Schwappbewegungen, gegebenenfalls in Verbindung mit einer Durchmischungsvorrichtung, wie voranstehend erwähnt, zu sorgen. Eine Blei-Säure-Batterie für einen Lkw unterliegt diesen Beanspruchungen in der Regel nicht, da häufig nur auf Autobahnen mit weiten Kurvenradien und normalerweise mit konstanter Geschwindigkeit gefahren wird. Zudem stellt sich bei einem Lkw das Problem der Tiefentladung aufgrund von Standzeiten, in denen ebenfalls elektrische Energie von der Batterie benötigt wird.

Der vorliegenden Erfindung liegt die Aufgabe zu Grunde, die Nutzungsdauer einer Flüssigelektrolytbatterie zu verlängern.

Die Aufgabe der Erfindung wird mit dem eingangs genannten Batteriedeckel gelöst, bei dem eine innere Oberfläche des Deckelkörpers zumindest bereichsweise eine konkave Krümmung oder eine Abschrägung aufweist, oder bei dem im von dem Deckelmantel und der Deckelstirnwand umschlossenen Deckelvolumen ein mit einer konkav gekrümmten Oberfläche oder mit einer Abschrägung versehenes Ableitelement angeordnet ist.

Zudem wird die Aufgabe der Erfindung mit der eingangs genannten Sekundärbatterie gelöst, die den erfindungsgemäßen Batteriedeckel aufweist.

Die Aufgabe der Erfindung wird auch mit dem eingangs genannten Verfahren gelöst, nach dem vorgesehen ist, dass der Elektrolyt zumindest zeitweise Vibrationen ausgesetzt wird, sodass Tröpfchen des Elektrolyts in Richtung eines Batteriedeckels eines Batteriegehäuses, in dem der Flüssigelektrolyt enthalten ist, geschleudert werden, und dass ein Batteriedeckel verwendet wird, der eine konkave Krümmung oder eine Abschrägung aufweist, sodass die auf den Batteriedeckel auftreffenden Tröpfchen des Elektrolyts in Richtung einer Seitenwand des Batteriegehäuses abgeleitet werden und entlang dieser Seitenwand wieder in den Flüssigelektrolyt zurückgeleitet werden.

Zudem wird die Aufgabe der Erfindung mit der Verwendung der erfindungsgemäßen Sekundärbatterie in einem Lkw gelöst.

Von Vorteil ist dabei, dass durch die Ausbildung des Deckels eine einfache Möglichkeit geschaffen wird, mit der die Tröpfchen nicht einfach wieder in den Elektrolyt zurückfallen, sondern gezielt abgeleitet werden. Die Deckelausbildung ist dabei konstruktiv einfach realisierbar, sodass Sonderlösungen, wie beispielsweise die in der voranstehend genannten DE 10 2010 021 868 A1 beschriebene Durchmischungsvorrichtung mit Scharnier, nicht erforderlich sind. Überraschenderweise hat sich auch gezeigt, dass es für die Durchmischung des Elektrolyts zur Vermeidung einer Dichteschichtung ausreichend ist, wenn der Elektrolyt mit Vibrationen beaufschlagt wird, die insbesondere auch in einem Lkw während der Fahrt erzeugt werden. Eine zusätzliche Vibrationseinrichtung ist daher nicht erforderlich (wenngleich sie natürlich eingesetzt werden kann). Die in einem Lkw beim Fahren erzeugten Vibrationen reichen auch bei ebener Fahrbahn und ohne Lenk- oder Bremsmanöver aus, den Flüssigelektrolyt kontinuierlich zu bewegen. Durch die Vibrationen wird kontinuierlich der Flüssigelektrolyt gegen die Deckelinnenseite "gespritzt", sodass über die beschriebenen Oberflächen ein kontinuierlicher Ablauf der Elektrolyttröpfen geringerer Dichte (da sie aus oberen Regionen des Elektrolyts stammen) in Richtung auf die Seitenwand des Batteriedeckels bzw. des Batteriekastens erreicht wird. Im Seitenbereich kann dann das Absinken der "Tröpfchen" weiter nach unten ermöglicht werden, um dabei eine Durchmischung mit Elektrolytschichten höherer Dichte zu erreichen. Im Wesentlichen kann damit also eine Art "Kreislaufströmung" des Flüssigelektrolyts erreicht werden.

Zur Verbesserung dieser Effekte kann nach einer Ausführungsvariante der Erfindung vorgesehen sein, dass die konkave Krümmung des Deckelkörpers oder des Ableitelements einen Radius aufweist, der ausgewählt ist aus einem Bereich von 5 cm bis 25 cm.

Nach einer anderen Ausführungsvariante der Erfindung kann vorgesehen sein, dass die konkave Krümmung Bereiche aufweist, die zueinander unterschiedliche Radien der Krümmung aufweisen. Es ist damit möglich, im Mittenbereich des Deckels größere Tropfen zu erhalten, wenn in diesem Mittenbereich die Krümmung einen größeren Radius aufweist. Wird dieser Radius in Richtung auf die Seitenwand oder die Seitenwände kleiner, die Krümmung also größer, dann können auch größere Tropfen relativ schnell ablaufen, ohne dass sie sich vorzeitig von der Oberfläche ablösen. Es gelangt damit mit einem Tropfen bereits ein größeres Volumen in den Flüssigelektrolyt zurück, womit die Durchmischung/Einmischung mit dem/in den Rest des Flüssigelektrolyts verbessert werden kann.

Gemäß einer anderen Ausführungsvariante der Erfindung kann vorgesehen werden, dass die konkav gekrümmte oder abgeschrägte Oberfläche mit einer die Benetzbarkeit des Deckelkörpers oder des Ableitelementes mit dem Flüssigelektrolyt reduzierenden Beschichtung versehen ist, oder dass diese Oberfläche selbst eine Oberflächenstruktur aufweist, die eine reduzierte Benetzbarkeit mit dem Flüssigelektrolyt aufweist. Durch die Reduzierung der Benetzbarkeit der Oberfläche können die anhaftenden Tropfen einfacher ablaufen, womit das Anwachsen der Tropfen auf eine Größe, die zu einem vorzeitigen Abreißen führt, besser verhindert werden. Das vorzeitige Abfallen des Tropfens von der Oberfläche würde zu einem Zurückfallen in den Flüssigelektrolyt führen, ohne dass es dabei zu einer (wesentlichen) Durchmischung mit höher konzentrierten Schichten kommt.

Nach einer weiteren Ausführungsvariante der Erfindung kann vorgesehen sein, dass die konkave Krümmung oder die Abschrägung der Oberfläche des Deckelkörpers oder des Ableitelementes in Richtung zweier einander gegenüber liegender Seitenwände des Deckelmantels symmetrisch verlaufend mit einer Symmetrieebene zwischen den beiden Seitenwänden ausgebildet ist. Es kann damit die Effizienz der Durchmischung unterschiedlich dichter Schichten des Flüssigelektrolyts verbessert werden, da mit dieser Ausführungsvariante im Prinzip zwei "Strömungswege" zur Verfügung gestellt werden. Zudem kann damit der Weg auf der Oberfläche des Batteriedeckels verkürzt werden, womit wieder die Gefahr des vorzeitigen Abfallens der Tropfen besser vermieden werden kann.

Entsprechend einer weiteren Ausführungsvariante der Erfindung kann vorgesehen sein, dass zwischen dem Elektrodenpaket und zumindest einer Kastenseitenwand des Kastenmantels eine Trennwand angeordnet ist, die sich bis oberhalb eines Flüssigkeitsniveaus des Flüssigelektrolyts erstreckt, und die beabstandet zum Kastenboden angeordnet ist oder die im Bereich des Kastenbodens mit zumindest einem Durchbruch versehen ist. Mit dieser Ausführungsvariante kann zwischen der Trennwand und der Kastenseitenwand des Kastenmantels ein Kanal ausgebildet werden, in den die Tröpfchen des Elektrolyts abgeleitet werden. Diese Ausführungsvariante hat den Vorteil, dass keine möglichst große "Kammer" zur Verfügung gestellt werden muss, die durch Schwappbewegungen gefüllt wird (hydrostatische Pumpe). Es ist damit möglich, das Elektrodenpaket trotz der "Durchmischungsvorrichtung" zentraler einzubauen.

Zur weiteren Reduktion des Platzbedarfs kann nach Ausführungsvarianten der Erfindung vorgesehen werden, dass ein Abstand zwischen der Trennwand und der Kastenseitenwand ausgewählt ist aus einem Bereich von 2 mm bis 20 mm, und/oder ein Abstand zwischen der Trennwand und den Elektrodenpaket ausgewählt ist aus einem Bereich von 0 mm bis 20 mm.

Zur Einhaltung eines Mindestabstandes zwischen dem Elektrodenpaket und der Trennwand kann nach einer Ausführungsvariante der Erfindung vorgesehen sein, dass an der Trennwand zumindest eine Rippe angeordnet ist, an der das Elektrodenpaket anliegt.

Nach einer anderen Ausführungsvariante kann auch vorgesehen sein, dass der Kastenboden zumindest eine Vertiefung aufweist, um damit ein Überleiten des Elektrolyts aus dem Kanal zwischen der Trennwand und der Seitenwand des Batteriekastens in den "Bulk" des Elektrolyts zu verbessern.

Zum besseren Verständnis der Erfindung wird diese anhand der nachfolgenden Figuren näher erläutert.

Es zeigen jeweils in vereinfachter, schematischer Darstellung:
- Fig. 1: eine Ausführungsvariante einer Sekundärbatterie im Querschnitt;
- Fig. 2: eine Ausführungsvariante eines Batteriedeckels im Querschnitt;
- Fig. 3: eine weitere Ausführungsvariante eines Batteriedeckels im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

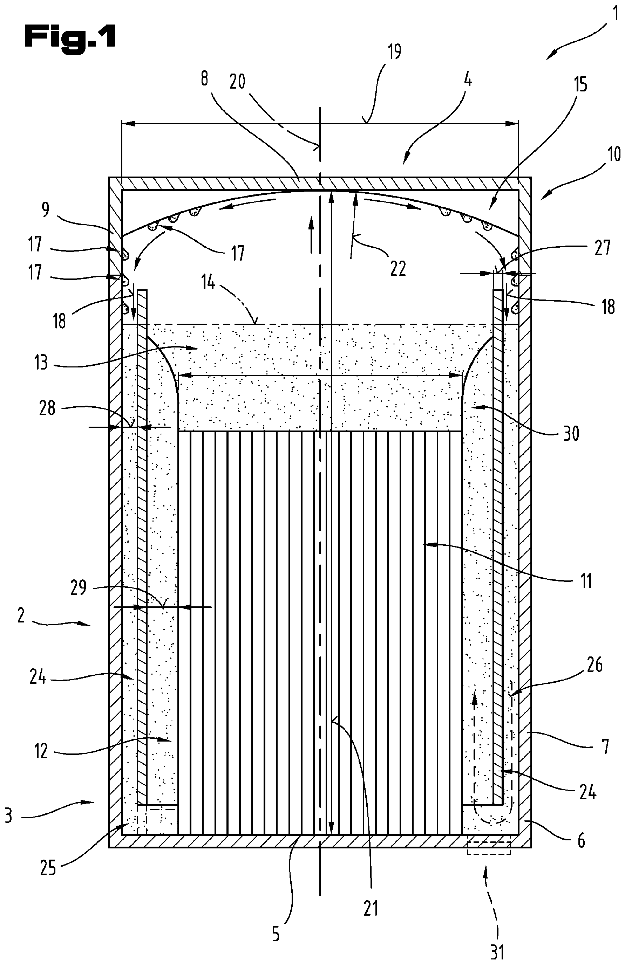

In Fig. 1 ist eine Sekundärbatterie 1 (auch als Akkumulator bezeichenbar) im Querschnitt dargestellt. Da Sekundärbatterien an sich aus dem Stand der Technik bekannt sind, erübrigen sich Ausführungen zu deren prinzipiellen Aufbau. Es sei dazu auf den einschlägigen Stand der Technik verwiesen.

Die Sekundärbatterie 1 ist insbesondere eine Blei-Säure-Batterie.

Die Sekundärbatterie 1 umfasst ein Batteriegehäuse 2. Das Batteriegehäuse 2 besteht üblicherweise aus einem polymeren Kunststoff, kann aber auch aus einem anderen geeigneten Werkstoff bestehen.

Das Batteriegehäuse 2 umfasst einen Batteriekasten 3 und einen Batteriedeckel 4 bzw. besteht daraus. Der Batteriekasten 3 weist einen Kastenboden 5 und einen daran (unmittelbar) anschließenden Kastenmantel 6 auf bzw. besteht daraus. Der Kastenmantel 6 wird von Kastenseitenwänden 7, üblicherweise von vier Kastenseitenwänden 7, gebildet. Der Batteriedeckel 4 weist einen Deckelkörper auf, der eine Deckelstirnwand 8 und einen daran (unmittelbar) anschließenden Deckelmantel 9 aufweist bzw. daraus besteht. Der Deckelmantel 6 wird von Deckelseitenwände 10 gebildet. Die Anzahl der Deckelseitenwände 10 entspricht üblicherweise der Anzahl an Kastenseitenwänden 7.

Der Batteriedeckel 4 ist mit dem Batteriekasten verbunden, insbesondere stoffschlüssig, wie beispielsweise verschweißt oder verklebt.

Im Batteriekasten 4 befinden sich Elektroden 11, die zu einem Elektrodenpaket 12 zusammengefasst sein können. Die Elektroden 11 können im Falle einer Blei-Säure-Batterie aus Blei bzw. Bleidioxid bestehen.

Weiter befindet sich im Batteriekasten ein Flüssigelektrolyt 13, beispielsweise verdünnte Schwefelsäure im Falle einer Blei-Säure-Batterie. Der Batteriekasten 3 ist mit dem Flüssigelektrolyt 13 vorzugsweise bis zu einem Flüssigkeitsniveau 14 aufgefüllt, bei dem die Elektroden zur Gänze im Flüssigelektrolyt 13 eintauchen, also unterhalb des Flüssigkeitsniveaus 14 angeordnet sind.

Der Batteriedeckel 4 ist an seiner dem Flüssigelektrolyt 13 zugewandten Seite, also der Innenseite, zumindest bereichsweise mit zumindest einer konkaven Krümmung oder zumindest einer Abschrägung versehen.

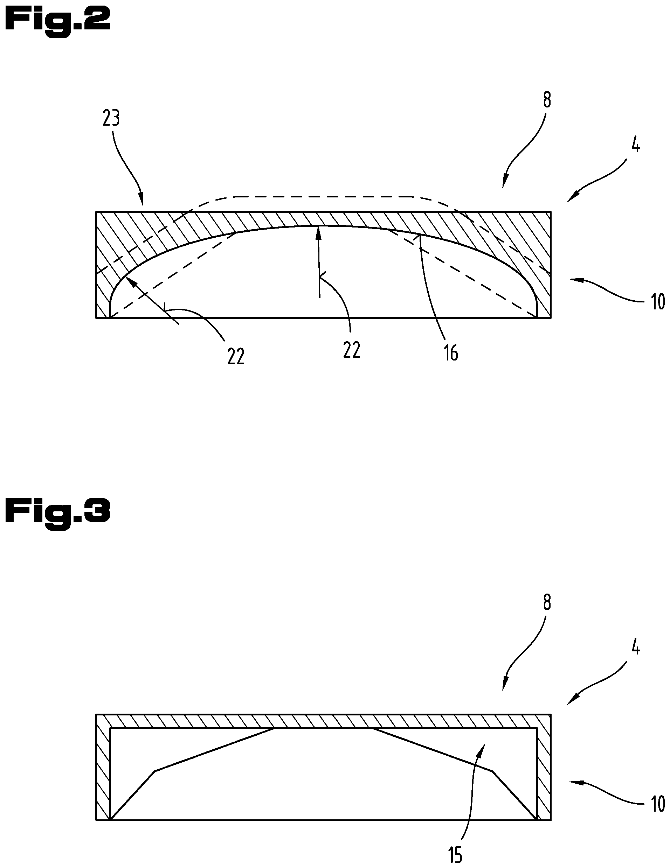

Die konkave Krümmung oder die Abschrägung kann dabei an einem Ableitelement 15 ausgebildet sein, das mit dem Deckelmantel 9 und/oder der Deckelstirnwand 8 verbunden, insbesondere stoffschlüssig und/oder formschlüssig verbunden, ist, wie dies die Fig. 1 für die konkave Krümmung und Fig. 3 für die zumindest eine Abschrägung zweigen. Es ist aber auch möglich, dass die Deckelstirnwand 8 selbst und gegebenenfalls zumindest eine Deckelseitenwand 10 an einer inneren Oberfläche 16 konkav gekrümmt oder abgeschrägt ist, wie dies die Fig. 2 in vollen Linien bzw. strichliert zeigt.

Das Ableitelement 15 kann insbesondere aus einem polymeren Kunststoff bestehen.

Die Abschrägung bzw. die konkave Krümmung ist derart ausgebildet, dass durch Vibrationen, denen die Sekundärbatterie 1 ausgesetzt ist, aus dem Flüssigelektrolyt 13 weggespritzte Tropfen 17 aus dem Flüssigelektrolyt 13 auf die abgeschrägte bzw. konkave gekrümmte Fläche auftreffen. Zumindest ein Teil der Tropfen bleibt auf dieser Fläche haften und läuft in der Folge an dieser abgeschrägten bzw. konkav gekrümmten Fläche in Richtung auf zumindest eine der Kastenseitenwände 7 des Kastenmantels 6 ab. In weiterer Folge werden die Tropfen 17 an der Innenseite des Kastenmantels 6 wieder in den Flüssigelektrolyt 13 zurückgeleitet, wie dies in Fig. 1 mit Pfeilen 18 angedeutet ist.

Die Vibrationen, denen die Sekundärbatterie 1 ausgesetzt wird, kann alleine aufgrund von Betriebsbewegungen des Fahrzeugs, in dem die Sekundärbatterie 1 eingesetzt wird, stammen. Es ist aber auch möglich, wenngleich nicht bevorzugt, einen Vorrichtung vorzusehen, mit der diese Vibrationen erzeugt werden.

Bevorzugt wird die Sekundärbatterie 1 in einem Lkw (Lastkraftwagen) eingesetzt, da hier die vom Lkw selbst erzeugten Vibrationen effektiver sind als in einem Pkw. Die Sekundärbatterie 1 kann aber auch in einem Pkw oder einem anderen Kraftfahrzeug eingesetzt werden.

Die Tropfen 17 stammen aus den oberen Schichten bzw. der obersten Schicht des Flüssigelektrolyts 13. Diese weisen häufig bei ungenügender Durchmischung des Flüssigelektrolyts 13 ein geringere Dichte auf als weiter unten liegende Schichten des Flüssigelektrolyts 13. Dieser Dichtegradient des Flüssigelektrolyts 13 stellt sich betriebsbedingt ein und verkürzt die Lebensdauer der Sekundärbatterie. Durch das seitliche Ablaufen der Tropfen 17 kann eine bessere Durchmischung dieser Tropfen 17 mit dem Rest des Flüssigelektrolyts 13 erreicht werden, womit Dichteunterschiede im Flüssigelektrolyt 13 reduziert werden können.

Es kann also mit der Sekundärbatterie 1 ein Verfahren zur Reduzierung der Dichteschichtung eines Flüssigelektrolyts 13 in der Sekundärbatterie 1 durchgeführt werden, nach dem der Flüssigelektrolyt 13 zumindest zeitweise Vibrationen ausgesetzt wird, sodass Tropfen 17 des Elektrolyts in Richtung eines Batteriedeckels 4 eines Batteriegehäuses 2, in dem der Flüssigelektrolyt 13 enthalten ist, geschleudert werden, wobei ein Batteriedeckel 4 verwendet wird, der eine konkave Krümmung oder eine Abschrägung aufweist, sodass die auf den Batteriedeckel 4 auftreffenden Tropfen 17 des Elektrolyts in Richtung einer Seitenwand des Batteriegehäuses 2 abgeleitet werden und entlang dieser Seitenwand wieder in den Flüssigelektrolyt 13 zurückgeleitet werden.

Die konkave Krümmung bzw. Abschrägung können sich über eine gesamte innere Breite 19 erstrecken oder nur über einen Teil dieser Breite 19. In diesem Fall kann ein Mittenbereich des Batteriedeckels 4 ebenflächig ausgebildet sein, wie dies in Fig. 3 angedeutet ist. Es kann aber auch vorgesehen sein, dass die Tropfen nur in Richtung einer einzigen Kastenseitenwand ablaufen. In diesem Fall kann die konkave Krümmung oder die Abschrägung bereits vor der Seitenwand enden, die der Seitenwand gegenüberliegend angeordnet ist, an der die Tropfen 17 wieder in den Flüssigelektrolyt abgeleitet werden.

Es ist also auch eine einseitige Ableitung der Tropfen 17 innerhalb des Batteriegehäuses 1 möglich. In der bevorzugten Ausführungsvariante, die in Fig. 1 dargestellt ist, ist jedoch vorgesehen, dass die konkave Krümmung oder die Abschrägung der Oberfläche 16 des Deckelkörpers oder der entsprechenden Fläche des Ableitelementes 15 in Richtung zweier einander gegenüberliegender Deckelseitenwände 10 des Deckelmantels 9 symmetrisch verlaufend mit einer Symmetrieebene 20 zwischen den beiden Deckelseitenwände 20 ausgebildet ist. Der Batteriedeckel 4 kann also beispielswiese zumindest annähernd tonnengewölbeförmig ausgebildet sein. Dabei kann eine lichte Höhe 21 des Innenraums des Batteriegehäuses 2 in der Mitte zwischen den beiden Deckelseitenwänden 20 am größten und an den beiden Deckelseitenwänden 20 am kleinsten sein, wie dies aus Fig. 1 ersichtlich ist.

Die konkave Krümmung kann über den gesamten Verlauf mit einem gleichbleibenden Krümmungsradius 22 ausgeführt sein. Nach einer Ausführungsvariante des Batteriedeckels 4 kann dabei der Krümmungsradius 22 ausgewählt sein aus einem Bereich von 5 cm bis 25 cm, vorzugsweise aus einem Bereich von 5 cm bis 15 cm, insbesondere aus einem Bereich von 13 cm bis 14 cm.

Im Falle der Abschrägung anstelle der konkaven Krümmung kann diese ein Gefälle aufweisen, das ausgewählt ist aus einem Bereich von 10 % bis 60 %, insbesondere von 15 % bis 45 %.

Es sei an dieser Stelle erwähnt, dass auch eine Kombination aus konkaver Krümmung und Abschrägung am Batteriedeckel 4 vorgesehen werden kann. Die Ausführungen zu der konkaven Krümmung und zur Abschrägung können, gegebenenfalls entsprechend adaptiert, auch auf diese Kombination angewandt werden.

Gemäß einer weiteren Ausführungsvariante des Batteriedeckels 4 kann vorgesehen werden, dass die konkave Krümmung Bereiche aufweist, die zueinander unterschiedliche Krümmungsradien 22 aufweisen, wie dies in Fig. 2 dargestellt ist. Dabei kann beispielsweise ein Mittenbereich einen größeren Krümmungsradius 22 aufweisen, als ein an die Deckelseitenwand 10 anschließender Bereich. Generell wird bei diesen Ausführungen mit mehreren unterschiedlichen Krümmungsradien 22 bevorzugt, wenn der Krümmungsradius 22 in Richtung auf die Deckelseitenwand 10 oder die Deckelseitenwände 10 kleiner wird.

Auch im Falle der Abschrägung(en) kann diese mit mehreren unterschiedlichen Gefällen ausgebildet sein, wie dies Fig. 3 zeigt. Die Ausführungen zu den mehreren Krümmungsradien 22 können entsprechend adaptiert auch auf die unterschiedlichen Gefälle der Abschrägung(en) angewandt werden.

In Fig. 2 strichliert dargestellt ist, dass auch die Deckelaußenseite 23 gekrümmt ausgeführt sein kann, wenngleich dies nicht bevorzugt ist. Vorzugsweise weist die Deckelaußenseite ebene Flächen auf.

Es sei zudem erwähnt, dass aus Gründen der besseren Übersichtlichkeit in den Figuren auf die Darstellung der Pole der Sekundärbatterie 1 sowie gegebenenfalls vorhandener weiterer Ein- und/oder Anbauten verzichtet wurde.

Gemäß einer anderen Ausführungsvariante des Batteriedeckels 4 kann vorgesehen sein, dass die konkav gekrümmte oder abgeschrägte Fläche mit einer die Benetzbarkeit des Deckelkörpers oder des Ableitelementes 15 mit dem Flüssigelektrolyt 13 reduzierenden Beschichtung versehen ist, oder dass diese Oberfläche selbst eine Oberflächenstruktur aufweist, die eine reduzierte Benetzbarkeit mit dem Flüssigelektrolyt 13 aufweist. Die Beschichtung kann beispielsweise eine Nanobeschichtung, also eine Beschichtung mit Partikeln, die eine Partikelgröße zwischen 1 nm und 1000 nm aufweisen, sein. Die Oberflächenstruktur kann beispielsweise eine schuppenförmige Struktur sein oder eine Struktur mit einer definierten Oberflächenrauheit.

Gemäß einer weiteren Ausführungsvariante der Erfindung kann vorgesehen werden, dass zwischen dem Elektrodenpaket 12 und zumindest einer Kastenseitenwand 7 des Kastenmantels 6 eine Trennwand 24 angeordnet ist, die sich bis oberhalb eines Flüssigkeitsniveaus 14 des Flüssigelektrolyts 13 erstreckt, und die beabstandet zum Kastenboden 5 angeordnet ist oder die im Bereich des Kastenbodens mit zumindest einem Durchbruch 25 versehen ist, wie dies in Fig. 1 strichliert dargestellt ist. Im Falle der bevorzugten beidseitigen Ableitung der Tropfen 17 sind vorzugsweise zwei derartige Trennwände 24 vorgesehen, wie dies ebenfalls aus Fig. 1 ersichtlich ist.

Mit der Trennwand 24 wird zwischen der zugehörigen Kastenseitenwand 7 und der Trennwand 24 ein vom Rest des Volumens der Sekundärbatterie 1 im wesentlichen abgetrennter Kanal 26 ausgebildet, in den die Tropen abfließen können. Nachdem das Volumen des Kanals 26 mit Ausnahme der Strömungsverbindung im Bodenbereich des Batteriekastens 3 vom restlichen Volumen des Flüssigelektrolyts 13 getrennt ist, kann hier eine bessere Durchmischung der Schichten an Flüssigelektrolyt 13 erfolgen, womit eine Art Kreislauf im bzw. des Flüssigelektrolyt(s) 13 angeregt werden kann, wie dies mit strichliertem Pfeil in Fig. 1 angedeutet ist.

Der zumindest eine Durchbruch 25, es können über die Länge und/oder die Höhe der Trennwand mehrere Durchbrüche 25 verteilt angeordnet sein, kann eine Querschnittsfläche zwischen 1 cm² und 5 cm² aufweisen. Eine gesamte Durchströmfläche bei mehreren Durchbrüchen 25 kann zwischen 2 cm² und 20 cm² betragen. Der Durchbruch 25 kann z.B. einen viereckigen oder mehreckigen oder runden, etc. Querschnitt aufweisen.

Die Trennwand 24 ist/ die Trennwände 24 sind vorzugsweise mit den Kastenseitenwänden 7 verbunden, insbesondere stoffschlüssig, die jeweils unmittelbar an die Kastenseitenwand 7 anschließen, die der Trennwand 24 unmittelbar benachbart ist. Die Trennwand 24 kann/ die Trennwände 24 können auch an diese Kastenseitenwände 7 angeformt sein.

Die Trennwand 24 besteht/ die Trennwände 24 bestehen somit vorzugsweise aus einem polymeren Kunststoff, insbesondere dem polymeren Kunststoff, aus dem auch der Batteriekasten 3 hergestellt ist.

Die Trennwand 24 kann eine Wandstärke 27 aufweisen, die ausgewählt ist aus einem Bereich von 2 mm bis 8 mm, insbesondere von 2 mm bis 4 mm.

Nach einer bevorzugten Ausführungsvariante der Sekundärbatterie 1 kann vorgesehen sein, dass ein Abstand 28 zwischen der Trennwand 24 und der Kastenseitenwand 7 ausgewählt ist aus einem Bereich von 2 mm bis 20 mm, insbesondere von 3 mm bis 8 mm.

Nach einer weiteren Ausführungsvariante der Sekundärbatterie 1 kann vorgesehen sein, dass ein Abstand 29 zwischen der Trennwand 24 und den Elektrodenpaket 12 ausgewählt ist aus einem Bereich von 0 mm bis 20 mm, insbesondere zwischen 1 mm und 15 mm. Um diesen Abstand 29 auch im Betrieb eines Kraftfahrzeugs zumindest annähernd einhalten zu können, kann gemäß einer weiteren Ausführungsvariante der Sekundärbatterie 1 vorgesehen sein, dass an der Trennwand 24 zumindest eine Rippe 30 angeordnet ist, an der das Elektrodenpaket 12 anliegt. Diese Rippe 30 kann als starre Rippe oder als Flexrippe ausgebildet sein.

Anstelle oder zusätzlich zu der voranstehend beschriebenen Strömungsverbindung kann nach einer weiteren Ausführungsvariante der Sekundärbatterie vorgesehen sein, dass der Kastenboden 5 zumindest eine Vertiefung 31 aufweist, wie dies in Fig. 1 strichliert dargestellt ist. Die Vertiefung 31 kann dabei auch so ausgeführt sein, dass nicht der Kastenboden 5 in diesem Bereich nicht nur dünner ausgeführt ist, sondern umgeformt ist. Vorzugsweise ist die Vertiefung 31 unterhalb der Trennwand 24 angeordnet.

Die Ausführungsbeispiele zeigen mögliche Ausführungsvarianten, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus die Sekundärbatterie 1 nicht zwingenderweise maßstäblich dargestellt ist.

**Bezugszeichenaufstellung**

| | | | |
|---|---|---|---|
| | | 30 | Rippe |
| 1 | Sekundärbatterie | 31 | Vertiefung |
| 2 | Batteriegehäuse | | |
| 3 | Batteriekasten | | |
| 4 | Batteriedeckel | | |
| 5 | Kastenboden | | |
| 6 | Kastenmantel | | |
| 7 | Kastenseitenwand | | |
| 8 | Deckelstirnwand | | |
| 9 | Deckelmantel | | |
| 10 | Deckelseitenwand | | |
| 11 | Elektrode | | |
| 12 | Elektrodenpaket | | |
| 13 | Flüssigelektrolyt | | |
| 14 | Flüssigkeitsniveau | | |
| 15 | Ableitelement | | |
| 16 | Oberfläche | | |
| 17 | Tropfen | | |
| 18 | Pfeil | | |
| 19 | Breite | | |
| 20 | Symmetrieebene | | |
| 21 | Höhe | | |
| 22 | Krümmungsradius | | |
| 23 | Deckelaußenseite | | |
| 24 | Trennwand | | |
| 25 | Durchbruch | | |
| 26 | Kanal | | |
| 27 | Wandstärke | | |
| 28 | Abstand | | |
| 29 | Abstand | | |

## Patentansprüche

1. Batteriedeckel (4) für eine, einen Flüssigelektrolyt (13) aufweisende Sekundärbatterie (1), umfassend einen Deckelköper der eine Deckelstirnwand (8) und einen an die Deckelstimwand (8) anschließenden Deckelmantel (9) aufweist, **dadurch gekennzeichnet, dass** eine innere Oberfläche (16) des Deckelkörpers zumindest bereichsweise eine konkave Krümmung oder eine Abschrägung aufweist, oder bei dem im von dem Deckelmantel (9) und der Deckelstirnwand (8) umschlossenen Deckelvolumen ein mit einer konkav gekrümmten Oberfläche oder mit einer Abschrägung versehenes Ableitelement (15) angeordnet ist.

2. Batteriedeckel (4) nach Anspruch 1, **dadurch gekennzeichnet, dass** die konkave Krümmung des Deckelkörpers oder des Ableitelements (15) einen Krümmungsradius (22) aufweist, der ausgewählt ist aus einem Bereich von 5 cm bis 25 cm.

3. Batteriedeckel (4) nach Anspruch 1 oder 2, **dadurch gekennzeichnet, dass** die konkave Krümmung Bereiche aufweist, die zueinander unterschiedliche Krümmungsradien (22) der Krümmung aufweisen.

4. Batteriedeckel (4) nach einem der Ansprüche 1 bis 3, **dadurch gekennzeichnet, dass** die konkav gekrümmte oder abgeschrägte Fläche mit einer die Benetzbarkeit des Deckelkörpers oder des Ableitelementes (15) mit dem Flüssigelektrolyt (13) reduzierenden Beschichtung versehen ist, oder dass diese Fläche selbst eine Oberflächenstruktur aufweist, die eine reduzierte Benetzbarkeit mit dem Flüssigelektrolyt (13) aufweist.

5. Batteriedeckel (4) nach einem der Ansprüche 1 bis 4, **dadurch gekennzeichnet, dass** die konkave Krümmung oder die Abschrägung der Oberfläche (16) des Deckelkörpers oder des Ableitelementes (15) in Richtung zweier einander gegenüberliegender Deckelseitenwände (10) des Deckelmantels (9) symmetrisch verlaufend mit einer Symmetrieebene (20) zwischen den beiden Deckelseitenwänden (10) ausgebildet ist.

6. Sekundärbatterie (1) umfassend ein Batteriegehäuse (2) mit einem Batteriekasten (3), der einen Kastenboden (5) und einen daran anschließenden Kastenmantel (6) aufweist, und einen mit dem Batteriekasten (3) verbundenen Batteriedeckel (4), wobei im Batteriegehäuse (2) ein Flüssigelektrolyt (13) und in den Flüssigelektrolyt (13) eintauchende Elektroden (11) eines Elektrodenpakets (12) angeordnet sind, **dadurch gekennzeichnet, dass** der Batteriedeckel (4) nach einem der Ansprüche 1 bis 5 ausgebildet ist.

7. Sekundärbatterie (1) nach Anspruch 6, **dadurch gekennzeichnet, dass** zwischen dem Elektrodenpaket (12) und zumindest einer Kastenseitenwand (7) des Kastenmantels (6) eine Trennwand (24) angeordnet ist, die sich bis oberhalb eines Flüssigkeitsniveaus (14) des Flüssigelektrolyts (13) erstreckt, und die beabstandet zum Kastenboden (5) angeordnet ist oder die im Bereich des Kastenbodens (5) mit zumindest einem Durchbruch (25) versehen ist.

8. Sekundärbatterie (1) nach Anspruch 7, **dadurch gekennzeichnet, dass** ein Abstand (28) zwischen der Trennwand (24) und der Kastenseitenwand (7) ausgewählt ist aus einem Bereich von 2 mm bis 20 mm.

9. Sekundärbatterie (1) nach Anspruch 7 oder 8, **dadurch gekennzeichnet, dass** ein Abstand (29) zwischen der Trennwand (24) und den Elektrodenpaket (12) ausgewählt ist aus einem Bereich von 0 mm bis 20 mm.

10. Sekundärbatterie (1) nach einem der Ansprüche 7 bis 9, **dadurch gekennzeichnet, dass** an der Trennwand (24) zumindest eine Rippe (30) angeordnet ist, an der das Elektrodenpaket (12) anliegt.

11. Sekundärbatterie (1) nach einem der Ansprüche 6 bis 10, **dadurch gekennzeichnet, dass** der Kastenboden (5) zumindest eine Vertiefung (31) aufweist.

12. Verfahren zur Reduzierung der Dichteschichtung eines Flüssigelektrolyts (13) einer Sekundärbatterie (1), **dadurch gekennzeichnet, dass** der Flüssigelektrolyt (13) zumindest zeitweise Vibrationen ausgesetzt wird, sodass Tropfen (17) des Flüssigelektrolyts (13) in Richtung eines Batteriedeckels (4) eines Batteriegehäuses (2), in dem der Flüssigelektrolyt (13) enthalten ist, geschleudert werden, und dass ein Batteriedeckel (4) verwendet wird, der eine konkave Krümmung oder eine Abschrägung aufweist, sodass die auf den Batteriedeckel (4) auftreffenden Tropfen (17) des Flüssigelektrolyts (13) in Richtung einer Seitenwand des Batteriegehäuses (2) abgeleitet werden und entlang dieser Seitenwand wieder in den Flüssigelektrolyt (13) zurückgeleitet werden.

13. Verfahren nach Anspruch 12, **dadurch gekennzeichnet, dass** zwischen einem Elektrodenpaket (12) und der Kastenseitenwand (7) des Batteriekastens (3) eine Trennwand (24) angeordnet wird, sodass zwischen der Trennwand (24) und der Kastenseitenwand (7) des Batteriekastens (3) ein Kanal (26) ausgebildet wird, in den die Tropfen (17) des Elektrolyts abgeleitet werden.

14. Verwendung einer Sekundärbatterie (1) nach einem der Ansprüche 6 bis 11 in einem Lkw.
